# FASCICULE DE BREVET EUROPEEN

(11) **EP 2 958 040 B1**
(45) Date de publication et mention de la délivrance du brevet: **18.11.2020**
(21) Numéro de dépôt: 15171075.3
(22) Date de dépôt: 08.06.2015
(51) Int. Cl.: G06F 21/12

(54) **PROCÉDÉ ET DISPOSITIF DE CODAGE DE FICHIERS SOURCES POUR LA LIVRAISON SÉCURISÉE DE CODE SOURCE**
CODIERVERFAHREN UND -VORRICHTUNG FÜR QUELLDATEIEN ZUR GESICHERTEN LIEFERUNG DES QUELLCODES
METHOD AND DEVICE FOR ENCODING SOURCE FILES FOR THE SECURE DELIVERY OF SOURCE CODE

(30) Priorité: 20.06.2014 FR 1455735
(43) Date de publication de la demande: 23.12.2015
(73) Titulaire: BULL SAS, 78340 Les Clayes sous Bois (FR)
(72) Inventeur: Quinzin, Maxime, 38000 Grenoble (FR); Davy, Louis, 38320 Poisat (FR); Couvee, Philippe, 38190 Villard Bonnot (FR)
(74) Mandataire: Santarelli

(56) Documents cités:
- US-A1- 2002 067 833
- US-B1- 6 684 389
- VIJAY K GARG ET AL: "The Weighted Byzantine Agreement Problem", PARALLEL&DISTRIBUTED PROCESSING SYMPOSIUM (IPDPS), 2011 IEEE INTERNATIONAL, IEEE, 16 May 2011 (2011-05-16), pages 524-531, XP032052405, DOI: 10.1109/IPDPS.2011.57 ISBN: 978-1-61284-372-8

## Description

La présente invention concerne la livraison de code source d'applications logicielles, permettant la compilation de ces dernières, et plus particulièrement un procédé et un dispositif de codage de fichiers sources pour la livraison sécurisée de code source permettant notamment de limiter l'accès, de façon distincte, à la lecture et à la compilation des fichiers comprenant ce code source à des utilisateurs autorisés, par exemple des utilisateurs en possession de clés de décryptage.

Les applications logicielles sont généralement développées dans un langage source, par exemple en langage C. Elles comprennent souvent un ensemble d'applications élémentaires ou d'outils indépendants ou partiellement dépendants. Typiquement, un développeur ou une équipe de développeurs écrit des fichiers en langage source puis compile ces fichiers, selon une cible particulière correspondant à un environnement d'exécution, avec les fichiers nécessaires, notamment des fichiers d'en-tête et des fichiers comprenant des directives de compilation.

La compilation permet d'obtenir un ensemble de fichiers exécutables représentant une application élémentaire ou un outil de l'application visée. Après compilation, l'application élémentaire ou l'outil peut être installé, testé puis utilisé. Si une erreur est détectée ou si certains aspects doivent être améliorés, les fichiers (ou certains d'entre eux) de code source sont modifiés. Ils doivent alors être recompilés et réinstallés.

Dans le domaine des applications logicielles dites ouvertes, aussi appelées application open source, les applications logicielles sont souvent livrées sous forme de paquetages (ou *packages* en terminologie anglo-saxonne).

Dans la version Red Hat de Linux (Red Hat et Linux sont des marques), il existe un outil de gestion d'applications appelé RPM (sigle de *Red Hat Package Manager* en terminologie anglo-saxonne) permettant notamment d'installer et de mettre à jour des applications à l'aide de commandes simples. Par abus de langage, les paquetages utilisés pour livrer des applications logicielles, dans la version Red Hat de Linux, sont souvent appelés RPMs.

Un RPM comprend un ensemble de fichiers constituant une application. Pour une application, il existe généralement plusieurs RPMs correspondant à différentes versions de celle-ci.

Chaque RPM est réalisé à partir d'un RPM source, noté src.rpm, comprenant un ensemble de fichiers de code source, permettant de générer l'application selon différents environnements d'exécution. Le RPM source comprend non seulement les fichiers sources, par exemple des fichiers de code (*.c) et des fichiers d'en-tête ou de définition (*.h) permettant de compiler l'application correspondante, mais également un ensemble de fichiers, appelés *spec,* utilisés pour la compilation dont certains définissent l'ordre de compilation des fichiers de code source ainsi que des fichiers permettant l'installation de l'application.

Par ailleurs, il est observé que, dans le cadre de certaines installations, typiquement d'une installation complexe, certains composants logiciels peuvent ne pas être de type ouvert (i.e. open source) et que, par conséquent, les fichiers correspondant comprenant le code source, appelé code source propriétaire, ne sont en principe pas accessibles aux clients. Cependant, dans certaines circonstances, par exemple en fonction de clauses contractuelles spécifiques, un client peut demander le droit d'accéder au code source propriétaire, par exemple pour en prendre connaissance ou pour être en mesure de recompiler l'application.

Par ailleurs, la présence de code source propriétaire sur un site peut présenter un intérêt particulier. A titre d'illustration, en cas de problème important, une équipe de maintenance de la société ayant fourni l'application logicielle peut avoir besoin d'éléments de code source propriétaire pour recompiler localement l'application après correction du problème.

Il est donc nécessaire que certains clients aient accès au code source propriétaire et que ce même accès soit bloqué à d'autres utilisateurs. Par ailleurs, il est observé que, pour des raisons de sécurité, il peut être interdit à des équipes de maintenance de se déplacer avec un support d'enregistrement comprenant des fichiers, quels qu'ils soient. En d'autres termes, les fichiers comprenant le code source propriétaire doit être obtenu indépendamment des équipes de maintenance les utilisant.

Comme rappelé ci-dessus, les sources RPMs comprennent, en particulier, des fichiers de code source et des fichiers d'en-tête ou de définition. Ainsi, un utilisateur en possession d'un fichier source RPM peut, de façon très simple, l'ouvrir pour explorer son contenu et/ou le compiler.

Il est observé ici que certaines sources RPMs peuvent être signées à l'aide d'une clé cryptographique permettant de vérifier leur intégrité. Cependant, ces mécanismes de signature ne permettent pas de restreindre, de façon sélective, l'accès à chaque fichier ou leur compilation.

Il existe donc un besoin pour autoriser la livraison de fichiers de code source et en gérer l'accès, notamment l'accès au contenu et à la compilation, de façon sélective.

La demande de brevet US 2002/067833 a pour objet la fourniture d'un code exécutable à un client ainsi que la fourniture d'un accès conditionné au code source correspondant. L'accès au code source est autorisé ou non par un tiers séquestre, selon des conditions prédéterminées, de telle sorte que, notamment, un client puisse avoir accès au code source pour l'améliorer ou le corriger en cas de défaillance du fournisseur. A ces fins, une clé de cryptage est générée puis utilisée pour crypter le code source qui est transmis au client ou au tiers séquestre avec le code exécutable.

Le brevet US 6,684,389 concerne un compilateur comprenant des fonctions de décryptage permettant la réception et la compilation de code source reçu crypté. Le compilateur décrit permet ainsi d'effectuer une compilation du code source selon des besoins spécifiques liés à un environnement d'exécution tout en protégeant le code source afin de limiter les risques de divulgation

L'invention permet de résoudre au moins un des problèmes exposés précédemment.

L'invention a ainsi pour objet un procédé de codage d'au moins un fichier source nécessaire à l'obtention d'au moins un fichier binaire exécutable par compilation dudit au moins un fichier source selon au moins un fichier de directives, ce procédé comprenant les étapes suivantes,
- obtention dudit au moins un fichier source et dudit au moins un fichier de directives ;
- obtention d'une pluralité de clés de cryptage correspondant à des niveaux d'accès différents, chacune des clés de ladite pluralité de clés de cryptage comprenant une indication de son niveau d'accès, ladite pluralité de clés de cryptage comprenant au moins une première clé de cryptage associée à un droit de compilation dudit au moins un fichier source et au moins une seconde clé de cryptage associée à un droit d'édition dudit au moins un fichier source ;
- sélection de chacune des clés de ladite pluralité de clés de cryptage et
   ∘ cryptage dudit au moins un fichier source selon la clé sélectionnée et
   ∘ génération d'au moins un fichier source crypté selon la clé sélectionnée ;
- génération d'un paquetage comprenant ledit au moins un fichier de directives et les fichiers sources cryptés selon chaque clé de la pluralité des clés de cryptage.

Le procédé selon l'invention permet ainsi la livraison sécurisée de codes sources à un client ou à toute autre personne, en protégeant, notamment, de façon distincte, son contenu et la possibilité de le compiler.

Selon un mode de réalisation particulier, le procédé comprend en outre une étape d'obtention d'au moins un fichier source dont l'accès est libre, le paquetage généré comprenant ledit au moins un fichier source obtenu dont l'accès est libre. Le procédé selon l'invention permet ainsi la livraison sécurisée de codes sources comprenant du code propriétaire devant être protégé et du code libre qu'il n'est pas nécessaire de protéger.

Toujours selon un mode de réalisation particulier, ladite étape de cryptage, exécutée pour chaque clé de ladite pluralité de clés, comprend en outre une étape de compression dudit au moins un fichier source. Le procédé selon l'invention permet ainsi d'optimiser le traitement et le volume de données à transmettre.

Toujours selon un mode de réalisation particulier, le procédé est utilisé pour le codage d'une pluralité de fichiers sources, les fichiers sources de ladite pluralité de fichiers sources étant organisés selon une arborescence, au moins une clé de ladite pluralité de clés cryptographiques étant associée à au moins un nœud de ladite arborescence, ladite au moins une clé associée audit au moins un nœud étant utilisée pour crypter l'ensemble des fichiers sources associés à ce nœud et aux nœuds de niveaux inférieurs reliés à ce nœud.

Le procédé selon l'invention permet ainsi de contrôler l'accès aux données, par exemple en édition et/ou en compilation, selon une structure hiérarchique des données.

Toujours selon un mode de réalisation particulier, le procédé comprend en outre une étape de transmission dudit paquetage généré.

L'invention a également pour objet un procédé de décodage d'un paquetage généré selon le procédé de codage décrit précédemment, le procédé de décodage comprenant les étapes suivantes :
- réception d'un paquetage source ;
- obtention d'une clé cryptographique parmi ladite pluralité de clés de cryptage, ladite clé cryptographique étant associée à un droit de compilation d'au moins un ensemble de données dudit paquetage source reçu ; et
- sélection et décryptage dudit au moins un ensemble de données dudit paquetage source reçu avec ladite clé cryptographique obtenue à des fins de compilation ; et
- compilation dudit au moins un ensemble de données décrypté.

Le procédé selon l'invention permet ainsi la réception sécurisée de codes sources par un client ou toute autre personne, en protégeant, notamment, de façon distincte, son contenu et la possibilité de le compiler.

L'invention a également pour objet un procédé de décodage d'un paquetage généré selon le procédé décrit précédemment, le procédé de décodage comprenant les étapes suivantes :
- réception d'un paquetage source ;
- obtention d'une clé cryptographique parmi ladite pluralité de clés de cryptage et validation que ladite clé cryptographique est associée à un droit d'édition d'au moins un ensemble de données dudit paquetage source reçu ; et
- si ladite clé cryptographique est associée à un tel droit :
   ∘ sélection et décryptage dudit au moins un ensemble de données dudit paquetage source reçu avec ladite clé cryptographique obtenue à des fins d'édition ; et
   édition de données dudit au moins un ensemble de données décrypté.

L'invention a également pour objet un programme d'ordinateur comprenant des instructions adaptées à la mise en œuvre de chacune des étapes des procédés décrits précédemment lorsque ledit programme est exécuté sur un ordinateur ainsi qu'un dispositif comprenant des moyens adaptés à la mise en œuvre de chacune des étapes des procédés décrits précédemment.

Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre certaines étapes d'un algorithme permettant la transmission de sources en vue de leur édition et/ou compilation, selon un mode de réalisation particulier de l'invention ;
- la figure 2 illustre schématiquement l'organisation d'un paquetage source compressé ;
- la figure 3 illustre schématiquement l'organisation d'un paquetage source compressé tel que celui illustré sur la figure 2, comprenant les fichiers sources compressés et des fichiers comprenant les directives de compilation, les fichiers sources compressés étant organisés selon une arborescence hiérarchique, les droits d'accès, en édition et/ou en compilation, étant gérés par niveau hiérarchique ; et
- la figure 4 illustre un exemple de dispositif de traitement d'informations adapté à mettre en œuvre, au moins partiellement, un mode de réalisation.

Selon un mode de réalisation particulier, un mécanisme de cryptage, de préférence à plusieurs niveaux, est utilisé lors de la création de paquetage source, par exemple lors de la création de RPMs sources. Tous les paquetages sources, plus généralement appelés sources ci-après, peuvent alors être distribués sans restriction particulière.

En l'absence de droits spécifiques, un utilisateur, en possession de cette source, ne peut accéder qu'à un nombre limité de données, par exemple des informations d'entête de la source (e.g. nom de fichier de code source et version logicielle).

Des clés de décryptage sont utilisées pour accéder aux fichiers de code source, selon un niveau d'accès associé à chaque clé. Ainsi, en fonction de la clé disponible, il peut être possible d'accéder au contenu d'une source ou de compiler cette source.

Ces clés de décryptage sont connues de membres du support du distributeur de l'application et/ou de clients, selon les besoins de chacun et, typiquement, de clauses contractuelles.

Une fonction de compression est avantageusement combinée à celle de cryptage lors de la création de paquetage source.

Ainsi, l'invention permet, selon ce mode de réalisation, de simplifier et uniformiser la livraison de sources car toutes les sources, de type ouvertes (i.e. open source) ou propriétaires, peuvent être livrées sans contraintes et indistinctement à tous les acteurs.

De cette façon les sources propriétaires sont protégées (i.e. ils ne sont pas accessibles aux clients n'ayant pas la clé de décryptage correspondante) mais sont accessibles aux équipes de support.

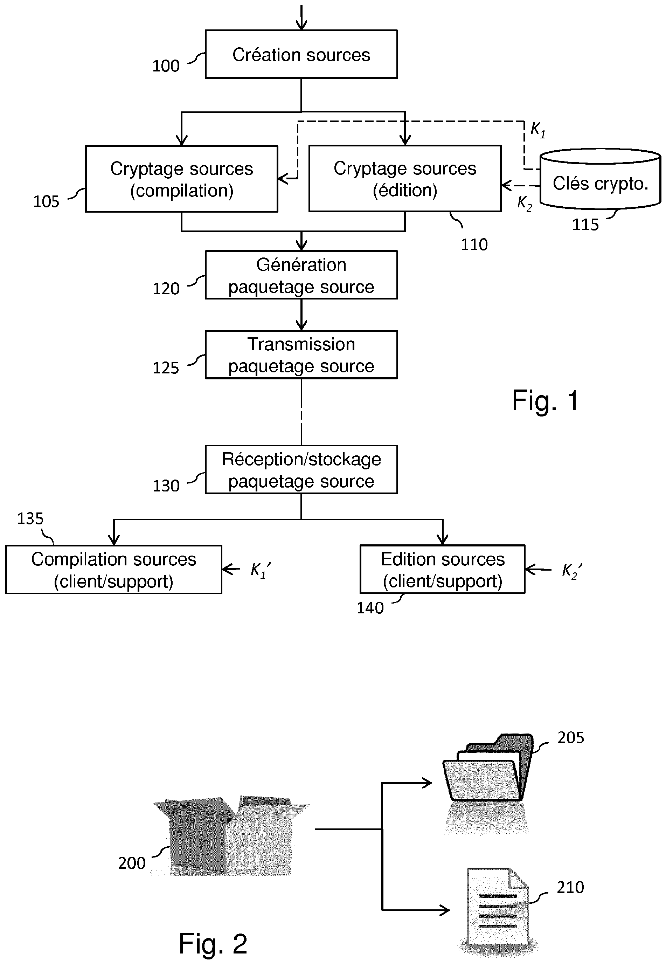

La figure 1 illustre certaines étapes d'un algorithme permettant la transmission de sources en vue de leur édition et/ou compilation, selon un mode de réalisation particulier de l'invention.

Comme illustré, une première étape a pour objet la création de sources (étape 100). Cette étape vise essentiellement l'écriture du code source et le regroupement des fichiers nécessaires à la compilation d'une application ou d'une composante d'une application (c'est-à-dire, en particulier, les fichiers de code source, les fichiers d'en-tête et de définitions et les fichiers comprenant les directives de compilation).

Dans des étapes suivantes, de préférence effectuées de façon parallèle, les sources sont cryptées selon une ou plusieurs clés cryptographiques correspondant à des niveaux d'accès différents.

Selon l'exemple illustré sur la figure 1, les sources sont cryptées de deux façons distinctes, avec deux clés cryptographiques de nature différente (*K₁* et *K₂*). Le premier cryptage (étape 105), effectué à l'aide de la clé *K₁*, vise ici à permettre la compilation des sources tandis que le second cryptage (étape 110), effectué avec la clé *K₂,* permet également l'édition des sources (ou de certaines sources).

Les clés cryptographiques utilisées sont ici mémorisées dans une base de données 115.

D'autres niveaux peuvent être utilisés pour, par exemple, permettre des accès sélectifs, en édition, à certaines sources. A titre d'illustration, une première clé cryptographique pourrait être utilisée pour éditer un premier ensemble de sources tandis qu'une seconde clé cryptographique serait nécessaire pour éditer un second ensemble de sources.

Il est rappelé ici que le cryptage de données vise à coder ces données pour les rendre inintelligibles. Seules les personnes pourvues du décodeur correspondant, typiquement d'une application de décryptage standard et d'une clé particulière, peuvent décrypter les données qui peuvent alors être transmises de façon sécurisée.

Selon un mode de réalisation particulier, le cryptage mis en œuvre est du type asymétrique, aussi appelé cryptage à clé publique. Selon ce type de cryptage, une clé publique permet de crypter des données tandis qu'une clé privée permet de les décrypter. En d'autres termes, un expéditeur utilise la clé publique d'un destinataire pour crypter des données que seul le destinataire, en possession de la clé privée, peut décrypter (garantissant ainsi la confidentialité du contenu).

Il est noté ici que les étapes de cryptage (e.g. étapes 105 et 110) peuvent être combinées avec des étapes de compression de données (non représentées) pour réduire le volume de données à transmettre.

Dans une étape suivante, les sources cryptées sont regroupées dans un paquetage avec un ou plusieurs fichiers, par exemple un ou plusieurs fichiers de compilation (étape 120)

Ensuite, le paquetage source est transmis à son ou ses destinataires (étape 125), typiquement un ou plusieurs clients.

Après réception et, généralement, stockage (étape 130), le paquetage source peut être exploité, par exemple pour compiler ou éditer les fichiers sources qu'il contient. Ainsi, par exemple, si un utilisateur dispose d'une clé cryptographique lui permettant de compiler les sources, typiquement une clé cryptographique privée *K₁'* à laquelle est associée la clé publique *K₁* ayant servi à crypter les sources pour permettre leur compilation, cet utilisateur peut compiler les sources (étape 135), seules ou avec d'autres sources, que cet utilisateur soit un client ou qu'il appartienne à une équipe de support.

Comme décrit précédemment et selon un mode de réalisation particulier, même si un utilisateur ne peut accéder aux sources qu'à des fins de compilation, il peut néanmoins, de préférence, accéder à certaines informations des sources, par exemple consulter les données de type en-tête comprenant notamment les noms et les versions des fichiers sources.

De façon similaire, si un utilisateur dispose d'une clé cryptographique lui permettant d'éditer les sources, par exemple une clé cryptographique privée *K₂'* à laquelle est associée la clé publique *K₂* ayant servi à crypter les sources pour permettre leur édition, cet utilisateur peut éditer les sources (étape 140), seules ou avec d'autres sources, que cet utilisateur soit un client ou qu'il appartienne à une équipe de support.

Ainsi, lorsque des sources ont été reçues et stockées au cours d'une étape 130, elles peuvent ensuite être accessibles aux fins de compilation uniquement pour certains utilisateurs, aux fins d'édition pour d'autres utilisateurs, selon la clé dont dispose chacun de ces utilisateurs, ou n'être accessible ni aux fins de compilation ni d'édition si le récipiendaire des sources ne dispose pas d'au moins une clé correspondante.

Lors de la réception d'un paquetage source, le choix des données à décrypter peut être effectué, par exemple, en fonction de la clé utilisée qui peut comprendre une indication relative à sa nature (e.g. décryptage pour une opération de compilation ou décryptage pour une opération d'édition), d'un choix de l'utilisateur, ou par tentatives de décryptage.

Selon un mode de réalisation de l'invention, un programme de génération de fichiers compressés de sources d'une application est modifié afin d'y intégrer une étape de cryptage, protégeant l'accès à sa lecture et/ou sa compilation. Deux niveaux d'accès associés à des clés cryptographiques sont, de préférence, mis en œuvre :
- premier niveau utilisant des clés d'accès complet : ces clés permettent l'installation de fichiers sources compressés et offrent un accès standard aux sources pour les lire et/ou les compiler ;
- second niveau utilisant des clés d'accès restreint (e.g. compilation uniquement) : ces clés ne permettent que de compiler des fichiers sources pour produire des fichiers binaires correspondants (fichiers exécutables). L'édition des sources est ici impossible. En outre, les sources ne sont, de préférence, pas installées.

Il est observé ici que beaucoup de systèmes d'exploitation offrent des outils permettant de générer des fichiers compressés, appelés paquetage source compressé ci-après, constitués de fichiers contenant, d'une part, les sources compressées d'une application et, d'autre part, des fichiers décrivant la façon de compiler ces fichiers (règles ou directives de compilation). La compilation en elle-même des sources, basée sur les règles de compilation, est effectuée par d'autres outils.

La figure 2 illustre schématiquement l'organisation d'un paquetage source compressé 200 comprenant les fichiers sources compressés, référencés 205, et des fichiers 210 comprenant les directives de compilation.

Comme décrit précédemment, RPM est un système de gestion de paquets logiciels qui est utilisé sur certaines distributions GNU et Linux. Le système est composé d'un format ouvert et d'un logiciel libre de manipulation des fichiers de ce format (qui est utilisé par Linux Standard Base, LSB).

RPM s'utilise en ligne de commandes ou avec une interface graphique. Il permet d'installer, désinstaller, vérifier, interroger et mettre à jour des paquetages logiciels. Chaque paquetage logiciel se compose d'une archive de fichiers et d'informations relatives au paquetage, en particulier sa licence, sa version, sa description et ses dépendances.

Un RPM source est typiquement créé en utilisant une commande connue sous le nom *'rpmbuild'* avec l'option *-bs.* L'extension du fichier ainsi créé est '.src.rpm'.

Il existe alors généralement deux façons de compiler un RPM source pour produire un ou plusieurs RPM binaires.

Selon une première méthode, le RPM source est installé à l'aide d'une commande connue sous le nom *'rpm'* avec l'option -*i*. L'archive des fichiers sources ainsi que le fichier *'spec'* sont placés dans une arborescence spécifique. L'édition des fichiers sources est alors possible. Il est également possible de compiler cet ensemble de fichiers sources (archive) et ce fichier *'spec'* à l'aide d'une commande connue sous le nom *'rpmbuild'* avec l'option - *bb.*

Selon une seconde méthode, le RPM source est compilé directement à l'aide de la commande *'rpmbuild'* avec l'option *--rebuild.* Dans ce cas, les fichiers sources contenant le code ne sont pas installés dans le système. Ils ne peuvent donc pas être édités.

Le ou les RPM binaires ainsi créés peuvent alors être installés sur un système Linux en utilisant la commande *'rpm'* avec l'option -*i*.

Selon un mode de réalisation particulier de l'invention, les commandes de création et de compilation de fichiers sources compressés et les commandes d'installation de fichiers sources sur un système sont modifiées pour protéger l'accès aux sources.

Une première modification vise la fonction relative à la compression des fichiers sources afin de les crypter lors de leur compression. A ces fins, de simples bibliothèques logicielles de cryptage peuvent être utilisées.

Ainsi, par exemple, deux options pouvant être nommées - *keycompileonly* <clé> et *-keyall <clé>* peuvent être ajoutées à la commande de création du fichier source compressé. Ces options permettent d'une part d'indiquer une commande de cryptage et d'autre part d'adresser les clés cryptographiques à utiliser à la fonction de cryptage devant être utilisée. Selon cet exemple, l'une de ces deux clés donne accès à la compilation seulement et l'autre donne un accès complet.

A titre d'illustration, la mise en œuvre de l'invention dans le gestionnaire RPM, selon un mode de réalisation particulier, conduit à l'utilisation de la commande *rpmbuild* avec les options *-bs -keycompileonly <clé>* et - *keyall <clé>.* Son exécution génère un source RPM crypté qui peut être décrypté à l'aide de deux clés différentes, offrant des niveaux d'accès différents.

Une seconde modification concerne la fonction d'installation de fichiers sources compressés permettant, ultérieurement, l'accès à ces sources.

La commande d'installation de fichiers de sources compressés est ici modifiée afin qu'elle puisse recevoir une clé de décryptage, cette dernière ayant pour objet d'offrir un accès complet aux sources (compilation et lecture).

Ainsi, par exemple, une option pouvant être nommée *-keyall <clé>* peut être ajoutée à cette commande afin d'autoriser l'installation de fichiers sources sur le système, si la clé fournie le permet, en vue d'une lecture ou d'une compilation. Si la clé n'est pas valide, l'installation est refusée.

A titre d'illustration, la mise en œuvre de l'invention dans le gestionnaire RPM, selon un mode de réalisation particulier, conduit à la modification de la commande *rpm* afin de rendre impossible l'installation d'un source RPM crypté, sans une clé de décryptage de type accès complet.

Enfin, une troisième modification concerne la fonction de compilation de fichiers sources compressés afin qu'elle puisse recevoir une clé de décryptage (qui ne permet que la recompilation directe).

Ainsi, par exemple, une option pouvant être nommée - *keycompileonly <clé>* peut être ajoutée à cette commande afin d'autoriser la compilation directe d'un fichier source encrypté et compressé, si la clé fournie le permet. Si la clé n'est pas valide, la compilation est refusée

A titre d'illustration, la mise en œuvre de l'invention dans le gestionnaire RPM, selon un mode de réalisation particulier, conduit à la modification de la commande *rpmbuild* pour interdire la compilation directe d'un fichier de sources encrypté et compressé, sans une clé de décryptage spécifique à la compilation.

Bien que l'exemple présenté ici soit basé sur l'utilisation de deux clés cryptographiques de natures distinctes, l'une permettant un accès complet aux sources et l'autre un accès pour la compilation uniquement, il est possible de définir des règles particulières. Selon un mode de réalisation particulier, la clé permettant un accès complet aux sources permet une compilation directe des sources à partir de fichiers sources compressés (sans passer par une étape de décompression contrôlée par un utilisateur, c'est-à-dire sans appel à deux fonctions distinctes l'une de décompression et l'autre de compilation).

De même, des clés cryptographiques d'autres natures peuvent être utilisées. En particulier, il peut être envisagé d'utiliser plusieurs clés cryptographiques organisées de façon arborescente, chaque clé étant associée à un nœud de l'arborescence et permettant l'accès à l'ensemble des sources associées à des nœuds de niveaux inférieurs, les fichiers sources étant également organisés selon la même arborescence.

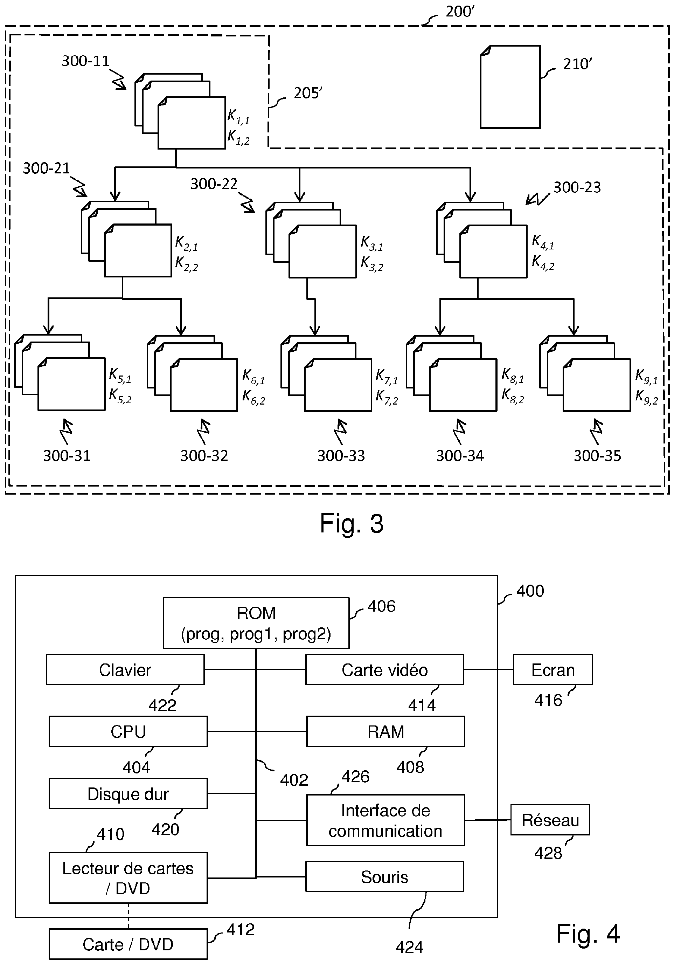

La figure 3 illustre schématiquement l'organisation d'un paquetage source compressé 200' tel que celui illustré sur la figure 2, comprenant les fichiers sources compressés, référencés 205' et des fichiers 210' comprenant les directives de compilation, les fichiers sources compressés étant organisés selon une arborescence hiérarchique, les droits d'accès, en édition et/ou en compilation, étant gérés par niveau hiérarchique.

Comme illustré, l'arborescence hiérarchique des fichiers sources compressés comprend ici trois niveaux.

Le premier niveau comprend un seul nœud auquel sont attachés les fichiers sources compressés 300-11, les clés cryptographiques *K_{1,1}* et *K_{1,2}* étant associées à ces fichiers sources compressés.

Le deuxième niveau comprend ici trois nœuds reliés au nœud du premier niveau. Les fichiers sources compressés 300-21, 300-22 et 300-23, associées aux paires de clés cryptographiques (*K_{2,1}* et *K_{2,2}*), (*K_{3,1}* et *K_{3,2}*) et (*K_{4,1}* et *K_{4,2}*), respectivement, sont attachés aux premier, second et troisième nœuds du deuxième niveau, respectivement.

De même, le troisième niveau comprend ici cinq nœuds. Les deux premiers nœuds du troisième niveau sont reliés au premier nœud du deuxième niveau, le troisième nœud du troisième niveau est relié au deuxième nœud du deuxième niveau et les deux derniers nœuds du troisième niveau sont reliés au troisième nœud du deuxième niveau. Les fichiers sources compressés 300-31 à 300-35, associées aux paires de clés cryptographiques (*K_{5,1}* et *K_{5,2}*) à (*K_{9,1}* et *K_{9,2}*), respectivement, sont attachés aux premier, second, troisième, quatrième et cinquième nœuds du troisième niveau, respectivement.

Selon une mise en œuvre particulière de l'invention, une clé cryptographique *K_{i,1}* associée à un nœud particulier donne accès, en compilation directe, à tous les fichiers sources compressés associés à des nœuds de niveaux inférieurs à ce nœud et reliés à ce dernier.

Ainsi, par exemple, la clé cryptographique *K_{2,1}* donne accès, en compilation directe, aux fichiers sources compressés 300-21, 300-31 et 300-32.

De façon similaire, une clé cryptographique *K_{i,2}* associée à un nœud particulier donne accès, en édition, à tous les fichiers sources compressés associés à des nœuds de niveaux inférieurs à ce nœud et reliés à ce dernier.

Ainsi, par exemple, la clé cryptographique *K_{3,2}* donne ici accès, en édition, aux fichiers sources compressés 300-22 et 300-33.

Selon l'exemple illustré que la figure 3, la clé cryptographique *K_{1,1}* donne accès, en compilation directe, à tous les fichiers sources compressés 300-11, 300-21 à 300-23 et 300-31 à 300-35 et la clé cryptographique *K_{1,2}* donne accès, en édition, à tous les fichiers sources compressés 300-11, 300-21 à 300-23 et 300-31 à 300-35.

Pour permettre un accès sélectif aux fichiers sources compressés, les fichiers sources peuvent être dupliqués et regroupés par branche, avant compression, puis compressés et cryptés à l'aide des clés correspondantes.

Il est observé ici que les clés cryptographiques utilisées pour crypter les fichiers peuvent être communes pour plusieurs destinataires ou, au contraire, être spécifiques à chaque destinataire ou utilisateur.

La figure 4 illustre un exemple de dispositif pouvant être utilisé pour mettre en œuvre, au moins partiellement, un mode de réalisation, notamment des étapes décrites en référence aux figures 2 et 3. Le dispositif 400 est par exemple un serveur.

Le dispositif 400 comporte de préférence un bus de communication 402 auquel sont reliés :
- une unité centrale de traitement ou microprocesseur 404 (CPU, sigle de *Central Processing Unit en* terminologie anglo-saxonne) ;
- une mémoire morte 406 (ROM, acronyme de *Read Only Memory* en terminologie anglo-saxonne) pouvant comporter le système d'exploitation et des programmes tels que "Prog" ;
- une mémoire vive ou mémoire cache 408 (RAM, acronyme de *Random Access Memory* en terminologie anglo-saxonne) comportant des registres adaptés à enregistrer des variables et paramètres créés et modifiés au cours de l'exécution des programmes précités ;
- un lecteur 410 de support amovible de stockage 412 tel qu'une carte mémoire ou un disque, par exemple un disque DVD ; et
- une carte graphique 414 reliée à un écran 416.

Optionnellement, le dispositif 400 peut également disposer des éléments suivants :
- un disque dur 420 pouvant comporter les programmes "Prog" précités et des données traitées ou à traiter selon l'invention ;
- un clavier 422 et une souris 424 ou tout autre dispositif de pointage comme un crayon optique, un écran tactile ou une télécommande permettant à l'utilisateur d'interagir avec les programmes selon l'invention ; et
- une interface de communication 426 reliée à un réseau de communication 428, par exemple le réseau Internet, l'interface étant apte à transmettre et à recevoir des données.

Le bus de communication permet la communication et l'interopérabilité entre les différents éléments inclus dans le dispositif 400 ou reliés à lui. La représentation du bus n'est pas limitative et, notamment, l'unité centrale est susceptible de communiquer des instructions à tout élément du dispositif 400 directement ou par l'intermédiaire d'un autre élément du dispositif 400.

Le code exécutable de chaque programme permettant à l'appareil programmable de mettre en œuvre les processus selon l'invention, peut être stocké, par exemple, dans le disque dur 420 ou en mémoire morte 406.

Selon une variante, le code exécutable des programmes pourra être reçu par l'intermédiaire du réseau de communication 428, via l'interface 426, pour être stocké de façon identique à celle décrite précédemment.

De manière plus générale, le ou les programmes pourront être chargés dans un des moyens de stockage du dispositif 400 avant d'être exécutés.

L'unité centrale 404 va commander et diriger l'exécution des instructions ou portions de code logiciel du ou des programmes selon l'invention, instructions qui sont stockées dans le disque dur 420 ou dans la mémoire morte 406 ou bien dans les autres éléments de stockage précités. Lors de la mise sous tension, le ou les programmes qui sont stockés dans une mémoire non volatile, par exemple le disque dur 420 ou la mémoire morte 406, sont transférés dans la mémoire vive 408 qui contient alors le code exécutable du ou des programmes selon l'invention, ainsi que des registres pour mémoriser les variables et paramètres nécessaires à la mise en œuvre de l'invention.

Naturellement, pour satisfaire des besoins spécifiques, une personne compétente dans le domaine de l'invention pourra appliquer des modifications dans la description précédente. La présente invention, qui est définie par les revendications indépendantes, ne se limite pas aux formes de réalisation décrites, d'autres variantes et combinaisons de caractéristiques sont possibles.

La présente invention a été décrite et illustrée dans la présente description détaillée en référence aux figures jointes. Toutefois, la présente invention, qui est définie par les revendications indépendantes, ne se limite pas aux formes de réalisation présentées. D'autres variantes et modes de réalisation peuvent être déduits et mis en œuvre par la personne compétente dans le domaine de l'invention à la lecture de la présente description et des figures annexées.

Dans les revendications, le terme « comporter » n'exclut pas d'autres éléments ou d'autres étapes. L'article indéfini « un » n'exclut pas le pluriel. Un seul processeur ou plusieurs autres unités peuvent être utilisés pour mettre en œuvre l'invention. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

## Revendications

1. Procédé de codage d'au moins un fichier source nécessaire à l'obtention d'au moins un fichier binaire exécutable par compilation dudit au moins un fichier source selon au moins un fichier de directives, ce procédé étant **caractérisé en ce qu'**il comprend les étapes suivantes,
- obtention dudit au moins un fichier source et dudit au moins un fichier de directives ;
- obtention d'une pluralité de clés de cryptage correspondant à des niveaux d'accès différents, chacune des clés de ladite pluralité de clés de cryptage comprenant une indication de son niveau d'accès, ladite pluralité de clés de cryptage comprenant au moins une première clé de cryptage associée à un droit de compilation dudit au moins un fichier source et au moins une seconde clé de cryptage associée à un droit d'édition dudit au moins un fichier source;
- sélection de chacune des clés de ladite pluralité de clés de cryptage et
∘ cryptage (105, 110) dudit au moins un fichier source selon la clé sélectionnée et
∘ génération d'au moins un fichier source crypté selon la clé sélectionnée ;
- génération (120) d'un paquetage comprenant ledit au moins un fichier de directives et les fichiers sources cryptés selon chaque clé de la pluralité des clés de cryptage.

2. Procédé selon la revendication 1 comprenant en outre une étape d'obtention d'au moins un fichier source dont l'accès est libre, le paquetage généré comprenant ledit au moins un fichier source obtenu dont l'accès est libre.

3. Procédé selon la revendication 1 ou la revendication 2 selon lequel ladite étape de cryptage, exécutée pour chaque clé de ladite pluralité de clés, comprend en outre une étape de compression dudit au moins un fichier source.

4. Procédé selon l'une quelconque des revendications 1 à 3 pour le codage d'une pluralité de fichiers sources, les fichiers sources de ladite pluralité de fichiers sources étant organisés selon une arborescence, au moins une clé de ladite pluralité de clés cryptographiques étant associée à au moins un nœud de ladite arborescence, ladite au moins une clé associée audit au moins un nœud étant utilisée pour crypter l'ensemble des fichiers sources associés à ce nœud et aux nœuds de niveaux inférieurs reliés à ce nœud.

5. Procédé selon l'une quelconque des revendications 1 à 4 comprenant en outre une étape de transmission dudit paquetage généré.

6. Procédé de décodage d'un paquetage généré selon l'une quelconque des revendications 1 à 4, le procédé étant **caractérisé en ce qu'**il comprend les étapes suivantes :
- réception (125) d'un paquetage source ;
- obtention d'une clé cryptographique parmi ladite pluralité de clés de cryptage et validation que ladite clé cryptographique est associée à un droit de compilation d'au moins un ensemble de données dudit paquetage source reçu ; et
- si ladite clé cryptographique est associée à un tel droit :
∘ sélection et décryptage dudit au moins un ensemble de données dudit paquetage source reçu avec ladite clé cryptographique obtenue à des fins de compilation; et
∘ compilation dudit au moins un ensemble de données décrypté.

7. Procédé de décodage d'un paquetage généré selon l'une quelconque des revendications 1 à 4, le procédé étant **caractérisé en ce qu'**il comprend les étapes suivantes :
- réception (125) d'un paquetage source ;
- obtention d'une clé cryptographique parmi ladite pluralité de clés de cryptage et validation que ladite clé cryptographique est associée à un droit d'édition d'au moins un ensemble de données dudit paquetage source reçu ; et
- si ladite clé cryptographique est associée à un tel droit :
∘ sélection et décryptage dudit au moins un ensemble de données dudit paquetage source reçu avec ladite clé cryptographique obtenue à des fins d'édition ; et
∘ édition de données dudit au moins un ensemble de données décrypté.

8. Programme d'ordinateur comprenant des instructions adaptées à la mise en œuvre de chacune des étapes du procédé selon l'une quelconque des revendications 1 à 7 lorsque ledit programme est exécuté sur un ordinateur.

9. Dispositif comprenant des moyens adaptés à la mise en œuvre de chacune des étapes du procédé selon l'une quelconque des revendications 1 à 7.

## Patentansprüche

1. Verfahren zur Codierung mindestens einer Quelldatei, die zum Erfassen mindestens einer binären Datei notwendig ist, die durch Kompilierung der mindestens einen Quelldatei entsprechend mindestens einer Anleitungsdatei ausführbar ist, wobei dieses Verfahren **dadurch gekennzeichnet ist, dass** es die folgenden Schritte umfasst:
- Erfassen der mindestens einen Quelldatei und der mindestens einen Anleitungsdatei;
- Erfassen von mehreren Verschlüsselungsschlüsseln, die unterschiedlichen Zugangsebenen entsprechen, wobei jeder der Schlüssel der mehreren Verschlüsselungsschlüssel eine Angabe seiner Zugangsebene umfasst, wobei die mehreren Verschlüsselungsschlüssel mindestens einen ersten Verschlüsselungsschlüssel, der mit einer Kompilationsberechtigung der mindestens einen Quelldatei assoziiert ist, und mindestens einen zweiten Verschlüsselungsschlüssel umfasst, der mit einer Ausgabeberechtigung der mindestens einen Quelldatei assoziiert ist;
- Auswählen jedes Schlüssels der mehreren Verschlüsselungsschlüssel, und
∘ Verschlüsseln (105, 110) der mindestens einen Quelldatei entsprechend dem ausgewählten Schlüssel, und
∘ Generieren mindestens einer Quelldatei, die entsprechend dem ausgewählten Schlüssel verschlüsselt ist;
- Generieren (120) einer Bündelung, welche die mindestens eine Anleitungsdatei und die Quelldateien umfasst, die entsprechend jedem Schlüssel der mehreren Verschlüsselungsschlüssel verschlüsselt sind.

2. Verfahren nach Anspruch 1, darüber hinaus einen Schritt des Erfassens mindestens einer Quelldatei umfassend, deren Zugang frei ist, wobei die generierte Bündelung die mindestens eine erfasste Quelldatei umfasst, deren Zugang frei ist.

3. Verfahren nach Anspruch 1 oder Anspruch 2, wobei der Verschlüsselungsschritt, der für jeden Schlüssel der mehreren Schlüssel durchgeführt wird, darüber hinaus einen Schritt einer Komprimierung der mindestens einen Quelldatei umfassend.

4. Verfahren nach einem der Ansprüche 1 bis 3 zur Codierung mehrere Quelldateien, wobei die Quelldateien der mehreren Quelldateien entsprechend einer Baumstruktur organisiert sind, wobei mindestens ein Schlüssel der mehreren Verschlüsselungsschlüssel mit mindestens einem Knoten der Baumstruktur assoziiert ist, wobei mindestens ein Schlüssel, der mit dem mindestens einen Knoten assoziiert ist, dazu verwendet wird, die Gesamtheit der Quelldateien zu verschlüsseln, die mit diesem Knoten und mit Knoten niedrigerer Ebenen assoziiert sind, die mit diesem Knoten verbunden sind.

5. Verfahren nach einem der Ansprüche 1 bis 4, darüber hinaus einen Schritt einer Übertragung der generierten Bündelung umfassend.

6. Verfahren zum Decodieren einer nach einem der Ansprüche 1 bis 4 generierten Bündelung, wobei das Verfahren **dadurch gekennzeichnet ist, dass** es die folgenden Schritte umfasst:
- Empfangen (125) einer Quellbündelung;
- Erfassen eines kryptografischen Schlüssels aus den mehreren Verschlüsselungsschlüsseln und Validieren, dass der kryptografische Schlüssel mit einer Kompilierungsberechtigung mindestens einer Gesamtheit von Daten der empfangenen Quellbündelung assoziiert ist; und
- wenn der kryptografische Schlüssel mit einer solchen Berechtigung assoziiert ist:
∘ Auswählen und Entschlüsseln der mindestens einen Gesamtheit von Daten der empfangenen Quellbündelung mit dem erhaltenen kryptografischen Schlüssel zu Kompilierungszwecken; und
∘ Kompilieren der mindestens einen entschlüsselten Gesamtheit von Daten.

7. Verfahren zum Decodieren einer nach einem der Ansprüche 1 bis 4 generierten Bündelung, wobei das Verfahren **dadurch gekennzeichnet ist, dass** es die folgenden Schritte umfasst:
- Empfangen (125) einer Quellbündelung;
- Erfassen eines kryptografischen Schlüssels aus den mehreren Verschlüsselungsschlüsseln und Validieren, dass der kryptografische Schlüssel mit einer Ausgabeberechtigung mindestens einer Gesamtheit von Daten der empfangenen Quellbündelung assoziiert ist; und
- wenn der kryptografische Schlüssel mit einer solchen Berechtigung assoziiert ist:
∘ Auswählen und Entschlüsseln der mindestens einen Gesamtheit von Daten der empfangenen Quellbündelung mit dem erhaltenen kryptografischen Schlüssel zu Ausgabezwecken; und
∘ Ausgabe der mindestens einen entschlüsselten Gesamtheit von Daten.

8. Computerprogramm, das Anweisungen umfasst, die zur Ausführung jedes der Schritte des Verfahrens nach einem der Ansprüche 1 bis 7 angepasst sind, wenn das Programm auf einem Computer abläuft.

9. Vorrichtung, Mittel umfassend, die zur Ausführung jedes der Schritte des Verfahrens nach einem der Ansprüche 1 bis 7 angepasst sind.

## Claims

1. Method of coding at least one source file required for obtaining at least one executable binary file by compilation of said at least one source file according to at least one instruction file, the method being **characterized in that** it comprises the following steps,
- obtaining said at least one source file and said at least one instruction file;
- obtaining a plurality of encryption keys corresponding to different access levels, each of the keys of said plurality of encryption keys comprising an indication of its access level, said plurality of encryption keys comprising at least one first encryption key associated with a right of compilation of said at least one source file and at least one second encryption key associated with a right of editing said at least one source file;
- selecting each of the keys of said plurality of encryption keys and
∘ encrypting (105, 110) said at least one source file according to the selected key and
∘ generating at least one encrypted source file according to the selected key;
- generating (120) a package comprising said at least one instruction file and the encrypted source files encrypted according to each key of the plurality of encryption keys.

2. Method according to claim 1, further comprising a step of obtaining at least one source file to which access is free, the generated package comprising said at least one obtained source to which access is free.

3. Method according to claim 1 or claim 2 in which said encrypting step, executed for each key of said plurality of keys, further comprises a step of compressing said at least one source file.

4. Method according to any one of claims 1 to 3 for the coding of a plurality of source files, the source files of said plurality of source files being organized according to a tree structure, at least one key of said plurality of cryptographic keys being associated with at least one node of said tree structure, said at least one key associated with said at least one node being used for encrypting all the source files associated with that node and with the nodes of lower levels linked to that node.

5. Method according to any one of claims 1 to 4 further comprising a step of transmitting said generated package.

6. Method of decoding a package generated according to any one of claims 1 to 4, the method being **characterized in that** it comprises the following steps:
- receiving (125) a source package;
- obtaining a cryptographic key from among said plurality of encryption keys and validating that said cryptographic key is associated with a right of compilation of at least one set of data of said received source package; and
- if said cryptographic key is associated with such a right:
∘ selecting and decrypting said at least one set of data of said received source package with said obtained cryptographic key for compilation purposes; and
∘ compiling said at least one set of decrypted data.

7. Method of decoding a package generated according to any one of claims 1 to 4, the method being **characterized in that** it comprises the following steps:
- receiving (125) a source package;
- obtaining a cryptographic key from among said plurality of encryption keys and validating that said cryptographic key is associated with a right of editing at least one set of data of said received source package; and
- if said cryptographic key is associated with such a right:
∘ selecting and decrypting said at least one set of data of said received source package with said obtained cryptographic key for editing purposes; and
∘ editing data of said at least one set of decrypted data.

8. Computer program comprising instructions adapted for carrying out each of the steps of the method according to any one of claims 1 to 7 when said program is executed on a computer.

9. Device comprising means adapted for the implementation of each of the steps of the method according to any one of claims 1 to 7.
